(19) Europäisches Patentamt
European Patent Office
Office européen des brevets

(11) **EP 2 728 799 B1**

(12) **EUROPEAN PATENT SPECIFICATION**

(45) Date of publication and mention
of the grant of the patent:
**23.11.2016 Bulletin 2016/47**

(51) Int Cl.:
*H04L 12/24* *(2006.01)*    *H04L 12/26* *(2006.01)*

(21) Application number: **13158414.6**

(22) Date of filing: **08.03.2013**

(54) **Transmitting and Receiving Side Terminals and Method of Monitoring Network Using the Same**

Endgeräte auf der Sende- und Empfangsseite und Verfahren zur Überwachung eines Netzwerks damit

Bornes latérales d'émission et de réception et procédé de surveillance de réseau les utilisant

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2012 KR 20120122022**

(43) Date of publication of application:
**07.05.2014 Bulletin 2014/19**

(73) Proprietor: **Samsung SDS Co. Ltd.
Seoul (KR)**

(72) Inventors:
• **Jeon, Joong-Bae**
  **138-052 Seoul (KR)**
• **Park, Ju-Hyun**
  **448-972 Gyeonggi-do (KR)**
• **Park, Min-Ah**
  **429-907 Gyeonggi-do (KR)**

(74) Representative: **Grünecker Patent- und
Rechtsanwälte
PartG mbB
Leopoldstraße 4
80802 München (DE)**

(56) References cited:
**EP-A1- 1 708 429    WO-A1-2008/108697**

• **ZHENHUI YUAN ET AL: "A novel bandwidth
estimation algorithm for IEEE 802.11 TCP data
transmissions", WIRELESS COMMUNICATIONS
AND NETWORKING CONFERENCE
WORKSHOPS (WCNCW), 2012 IEEE, IEEE, 30
April 2012 (2012-04-30), pages 377-382,
XP032185820, DOI:
10.1109/WCNCW.2012.6215526 ISBN:
978-1-4673-0681-2**
• **DANIELE CROCE ET AL: "Large-Scale Available
Bandwidth Measurements: Interference in
Current Techniques", IEEE TRANSACTIONS ON
NETWORK AND SERVICE MANAGEMENT, IEEE,
US, vol. 8, no. 4, 31 December 2011 (2011-12-31),
pages 361-374, XP011389333, ISSN: 1932-4537,
DOI: 10.1109/TNSM.2011.110311.110110**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### 1. Field of the Invention

The present disclosure relates to network monitoring technology, and more particularly, to transmitting and receiving side terminals that perform network monitoring using a service packet actually used for service and a method of monitoring a network using the terminals.

### 2. Discussion of Related Art

Thus far, a method of measuring network status by additionally transmitting probing packets has been used for network monitoring. In this case, the probing packets are used in addition to packets for actual service, and there is a problem in that a bandwidth of the corresponding network is additionally consumed by the probing packets. This problem causes a reduction in a network bandwidth that can be used for the service, and may disrupt normal running of the service.

WO 2008/108697 A1 refers to passive monitoring of network performance and refers to methods and arrangements to measure network performance. The method comprises the following steps: Transmitting via a communication network (IP) payload packets from a sending node (GGSN/A) to a receiving node (GGSN/B). - Generating at the sending node (GGSN/A) a send specification for each of at least one selected packet of the transmitted payload packets. Generating at the receiving node (GGSN/B), a receive specification for each of at least one selected packet of the transmitted payload packets. Bringing together generated send specifications and generated receive specifications. Estimating network performance by utilizing corresponding specifications of the brought together specifications.

EP 1 708 429 A1 and KR 10-2006-0122901 A refer to a speed calculation system and discloses a technique for performing network monitoring by inserting probe information in service packets used for actual service without additionally using probing packets.

The publication title " A novel bandwidth estimation algorithm for IEEE 802.11 TCP data transmissions" by Zhenhui Yuan et al, School of Electronic Engineering, Dublin City University, Ireland, dated April 30, 2012, pages 377 to 382, DOI: 10.1109/WCMCW.2012.6215526, ISBN: 978-1-4673-0681-2 refers to efficient bandwidth estimation. Efficient bandwidth estimation is significant for Quality of Service (QoS) of multimedia services in IEEE 802.11 WLANs. Many bandwidth estimation solutions have been developed such as probing-based technique and cross-layer scheme. However, these solutions either introduce additional traffic or require modification to the standard protocols. This paper develops a model based bandwidth estimation algorithm at application layer when TCP traffic is delivered in the IEEE 802.11 networks. The proposed model firstly considers both TCP congestion control mechanism and IEEE 802.11 contention-based channel access mechanism. The bandwidth estimation process at the server estimates the achievable bandwidth using two types of parameters: data size to be sent and the feedback information from receivers, i.e. packet loss rate and the number of clients. The two tailed T-test analysis demonstrates that there is a 95% confidence level that there is no statistical difference between the results from the proposed bandwidth estimation algorithm and the results from the real test. Additionally, the proposed algorithm achieves higher accuracy and lower standard deviation of bandwidth, in comparison with other state-of-the art bandwidth estimation schemes.

## SUMMARY OF THE INVENTION

It is the object of the present invention to provide terminals capable of obtaining accurate network monitoring results without additionally consuming a network bandwidth and a method for monitoring a network using the terminals.

This object is solved by the subject matter of the independent claims.

Preferred embodiments are defined by the dependent claims.

According to an aspect of the exemplary embodiment, there is provided a transmitting side terminal according to claim 1

According to another aspect of the exemplary embodiment, there is provided a receiving side terminal according to claim 8

According to another aspect of the exemplary embodiment, there is provided a method of monitoring a network according to claim 13

## BRIEF DESCRIPTION OF THE DRAWINGS

The above and other objects, features and advantages of the exemplary embodiment will become more apparent to those of ordinary skill in the art by describing in detail exemplary embodiments thereof with reference to the accompanying drawings, in which:

FIG. 1 is a diagram showing a constitution of a network monitoring system according to an exemplary embodiment;

FIG. 2 is a detailed block diagram of a first terminal according to an exemplary embodiment;

FIG. 3 is a diagram illustrating a packet pair mode and a packet train mode;

FIG. 4 is a diagram illustrating a state in which a train threshold is determined according to an exemplary embodiment;

FIG. 5 is a diagram showing the distribution of probing packets generated when a bit rate of an image frame is 1400 Kbps;

FIG. 6 is a diagram showing the distribution of probing packets generated when a bit rate of an image frame is 700 Kbps;

FIG. 7 is a diagram showing the distribution of probing packets generated when a bit rate of an image frame is 300 Kbps;

FIG. 8 is a detailed block diagram of a second terminal according to an exemplary embodiment;

FIG. 9 is a graph for comparing the amount of data traffic generated when service packets are compatibly used for probing with the amount of data traffic generated when probing packets are additionally used;

FIG. 10 is a table showing results of measuring the sizes of packets generated for one minute and time intervals between the packets when a first terminal performs streaming transmission of a moving picture having a bit rate of 700 Kbps to a second terminal in a network monitoring system according to an exemplary embodiment;

FIG. 11 is table showing the amount of additional traffic generated when a time interval between probing packets exceeds a predetermined threshold, and dummy packets are generated;

FIG. 12 is a graph for comparing the amount of additional traffic generated when a time interval between probing packets exceeds a predetermined threshold, and dummy packets are generated, with the amount of additional traffic generated when the time interval between probing packets exceeds the predetermined threshold, and a channel quality indicator (CQI) measurer is used;

FIG. 13 is a flowchart illustrating operation of a packet classifier in a first terminal according to an exemplary embodiment;

FIG. 14 is a flowchart illustrating operation of a packet transmitter in a first terminal according to an exemplary embodiment;

FIG. 15 is a flowchart illustrating operation of a packet processor in a second terminal according to an exemplary embodiment; and

FIG. 16 is a flowchart illustrating a network monitoring operation in a second terminal according to an exemplary embodiment.

## DETAILED DESCRIPTION OF EXEMPLARY EMBODIMENTS

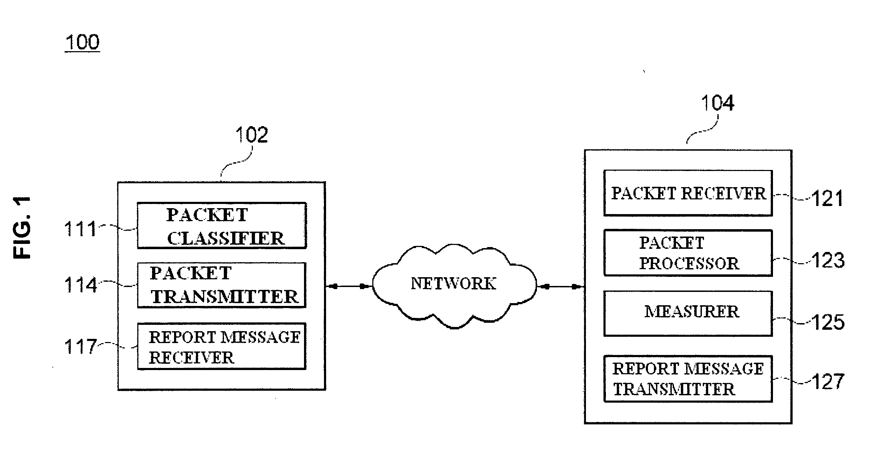

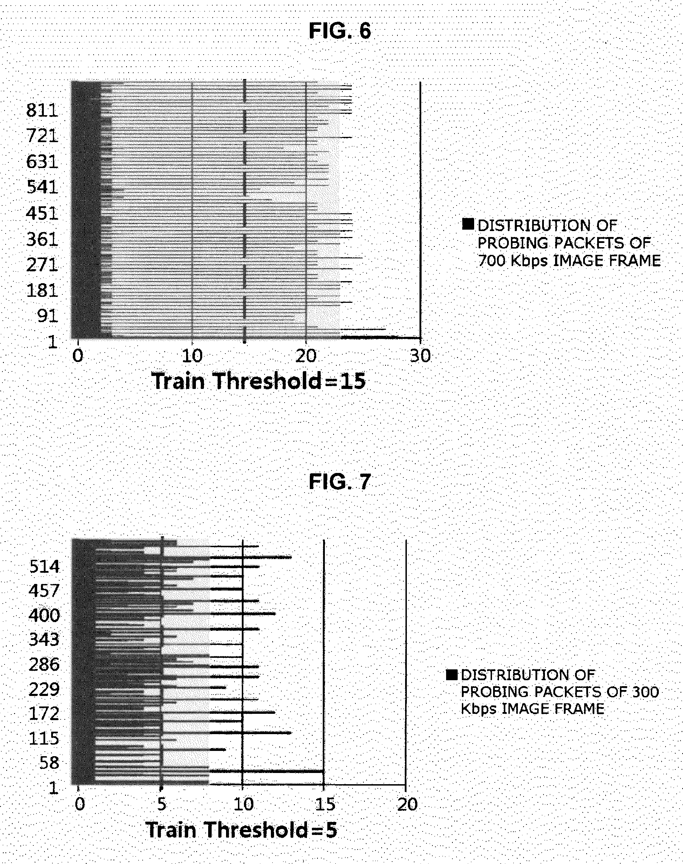

Terminals and a method of monitoring a network using the terminals according to exemplary embodiments will be described in detail below with reference to FIG. 1 to FIG 16. However, the exemplary embodiments are merely examples and are not to be construed as limiting the inventive concept.

When it is determined that the detailed description of known art related to the exemplary embodiment may obscure the gist of the inventive concept, the detailed description thereof will be omitted. Terminology described below is defined considering functions in the exemplary embodiment and may vary according to a user's or operator's intention or usual practice. Thus, the meanings of the terminology should be interpreted based on the overall context of the present specification.

FIG 1 is a diagram showing a constitution of a network monitoring system according to an exemplary embodiment.

Referring to FIG 1, a network monitoring system 100 includes a first terminal 102 and a second terminal 104. Here, a section to be monitored is a network section between the first terminal 102 and the second terminal 104. Here, the network may be a wireless network or a wired network. Alternatively, a predetermined section of the network may be a wireless network, and the other section may be a wired network. In other words, a network environment between the first terminal 102 and the second terminal 104 includes a wireless environment, a wired environment, and a wireless and wired environment.

The first terminal 102 includes a packet classifier 111, a packet transmitter 114, and a report message receiver 117. The second terminal 104 includes a packet receiver 121, a packet processor 123, a measurer 125, and a report message transmitter 127.

Here, it is assumed that the first terminal 102 transmits a probing packet and the second terminal 104 receives the probing packet to measure a network monitoring parameter, and only constitutions of the first terminal 102 and the second terminal 104 required for the assumption are illustrated. However, the first terminal 102 and the second terminal 104 are not limited to these constitutions, and may also include all components required for the second terminal 104 to transmit probing packets and required for the first terminal 102 to receive the probing packets and measure a network monitoring parameter.

The network monitoring parameter may include at least one of, for example, effective capacity, achievable throughput and available bandwidth. However, the network monitoring parameter is not limited to these, and various other network monitoring parameters may be employed.

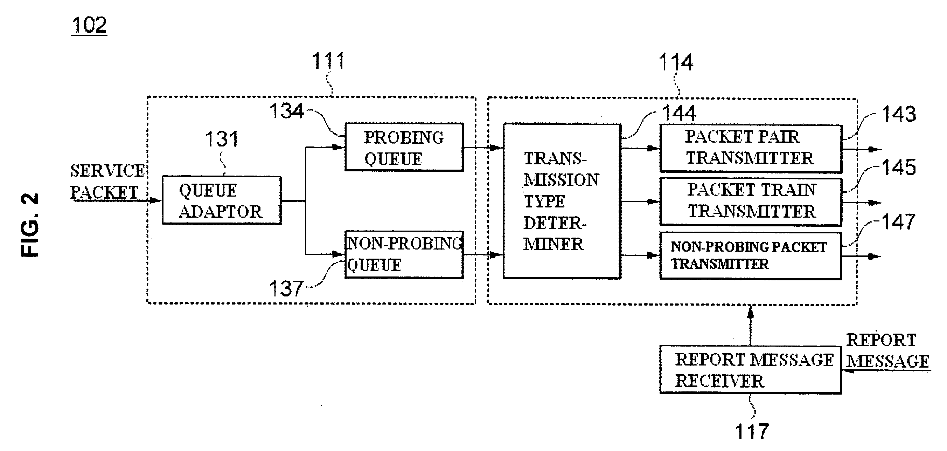

FIG. 2 is a detailed block diagram of a first terminal according to an exemplary embodiment. With reference to FIG. 1 and FIG. 2, a constitution and operation of the first terminal 102 will be described in detail below.

The packet classifier 111 of the first terminal 102 includes a queue adaptor 131, a probing queue 134, and a non-probing queue 137.

The packet classifier 111 classifies a service packet generated in the first terminal 102 according to a feature of the service packet. Here, a service packet is a packet used in an actual communication service (e.g., video telephony and data communication). For example, according to the size of the service packet, the packet classifier 111 may determine whether to compatibly use the service packet for probing or to use the service packet only for its original purpose. Description will be made below on the assumption that the packet classifier 111 determines whether to compatibly use a service packet for probing or to use the service packet only for its original purpose according to the size of the service packet. However, the packet classifier 111 is not limited to this, and may classify the corresponding service packet according to various features (e.g., the frequency of generation) of the service packet. In an exemplary embodiment, a service packet is compatibly used for probing, and no probing packet is generated and transmitted. For this reason, a network bandwidth is not additionally consumed in a network monitoring process.

When a service packet generated from, for example, a media engine (not shown) is input, the queue adaptor 131 inserts meta-information (e.g., reception time of the service packet, a sequence number of the packet, and socket information) in the service packet. The queue adaptor 131 may insert the meta-information in a header of the service packet.

According to the size of the input service packet, the queue adaptor 131 inserts the service packet in the probing queue 134 or the non-probing queue 137. The queue adaptor 131 may insert the service packet in the probing queue 134, for example, when the size of the service packet is greater than a predetermined threshold probing size, and may insert the service packet in the non-probing queue 137 when the size of the service packet is less than the predetermined threshold probing size. Here, the service packet inserted in the probing queue 134 is compatibly used for probing. A service packet compatibly used for probing will be referred to as a "probing packet" below. Also, the service packet inserted in the non-probing queue 137 is used only for its original purpose. A service packet used only for its original purpose will be referred to as a "non-probing packet" below.

Here, the queue adaptor 131 inserts the input service packet in the probing queue 134 or the non-probing queue 137 for classification according to the size of the service packet because the size of a service packet generated from the media engine (not shown) is not fixed although the size of a probing packet should be a predetermined size or more to properly reflect network status. In other words, since a probing packet may have too small a size to properly reflect network capacity, service packets input from the media engine (not shown) are inserted in the probing queue 134 or the non-probing queue 137 for classification according to the sizes of the service packets so as to filter packets that can be used as probing packets among the service packets. In this case, even when service packets are generated with dynamically changing sizes from the media engine (not shown), by filtering service packets that can be used for probing according to their sizes, it is possible to obtain network monitoring results in which network status is properly reflected.

The packet transmitter 114 of the first terminal 102 includes a packet pair transmitter 143, a transmission type determiner 144, a packet train transmitter 145, and a non-probing packet transmitter 147.

The packet transmitter 114 transmits probing packets inserted in the probing queue 134 or service packets inserted in the non-probing queue 137 to the second terminal 104. At this time, the packet transmitter 114 performs transmission in a packet pair mode or a packet train mode according to the number of probing packets inserted in the probing queue 134.

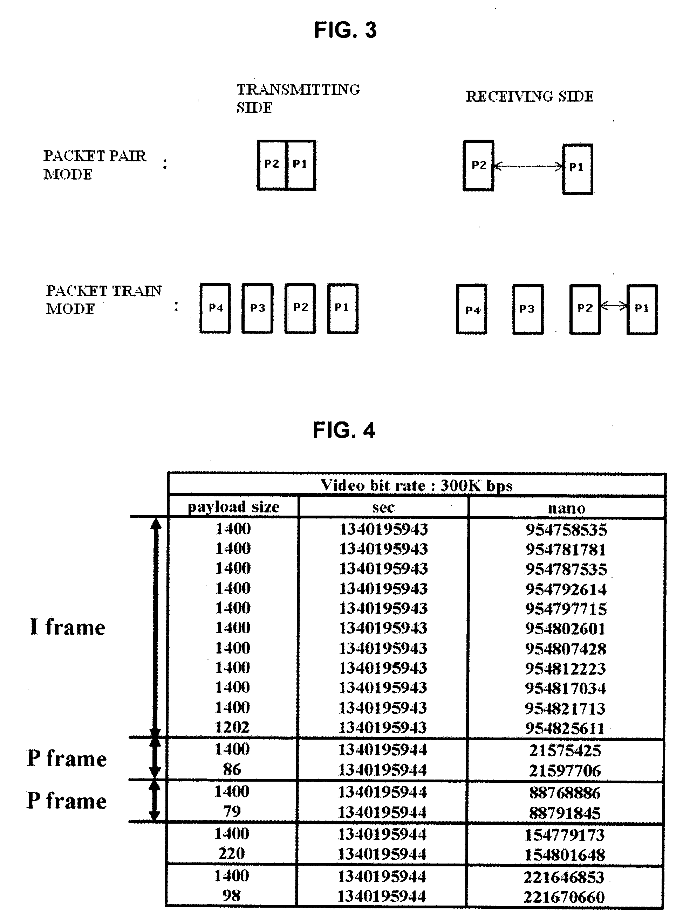

FIG. 3 is a diagram illustrating the packet pair mode and the packet train mode. Referring to FIG. 3, in the packet pair mode, a transmitting side pairs two probing packets P1 and P2 and transmits the pair of the probing packets P1 and P2, and a receiving side measures a receiving time interval between the two probing packets P1 and P2 to perform network monitoring. Using the packet pair mode, it is possible to calculate an effective capacity that is the maximum transmittable capacity of the corresponding network. Here, the effective capacity can be calculated by Equation 1 below.

[Equation 1]

$$C_e = \frac{\sum_{i=0}^{n} \frac{L_i}{T_i}}{n}$$

Here, $C_e$ denotes an effective capacity, $L_i$ denotes the size of packets of an $i^{th}$ pair, $T_i$ denotes a time interval between the packets of the $i^{th}$ pair, and n denotes a generation number of packet pairs.

In the packet train mode, a transmitting side puts a plurality of probing packets P1, P2, P3 and P4 having a predetermined time interval into one group, and a receiving side measures receiving time intervals between the probing packets P1, P2, P3 and P4 to perform network monitoring. Using the packet train mode, it is possible to calculate an achievable throughput and an available bandwidth of the corresponding network.

Here, an interval between packet pairs can be adjusted using an available bandwidth of the corresponding network. In other words, by allocating the available bandwidth of the corresponding network according to the number of intervals between packet pairs, it is possible to adjust the intervals between the packet pairs. Also, an interval between packets in a packet train can be adjusted using an effective capacity of the corresponding network. In other words, by calculating a time interval between packets back from the effective capacity $C_e$ of Equation 1, it is possible to adjust an interval between packets in a packet train.

Here, an effective capacity of the corresponding network is calculated using the packet pair mode, and an achievable throughput and an available bandwidth of the corresponding network are calculated using the packet train mode. However, network monitoring parameters are not limited to these, and various other network monitoring parameters may be calculated using the respective modes. For example, using the packet pair mode, it is possible to calculate an available bandwidth of a network rather than an effective capacity of the network. Like this, various network monitoring parameters can be calculated using the respective modes.

Referring back to FIG. 1 and FIG. 2, when a time difference between the current time and a first packet inserted in the probing queue 134 or the non-probing queue 137 is greater than a predetermined sending queue delay threshold, the packet transmitter 114 determines that there is a high probability of all packets of one frame having been generated, and may start transmission of probing packets or non-probing packets.

According to the number of probing packets in the probing queue 134, the transmission type determiner 144 determines whether to transmit the probing packets using the packet pair mode or the packet train mode. For example, the transmission type determiner 144 transmits the probing packets in the probing queue 134 using the packet pair mode when the number of probing packets is less than a predetermined train threshold, and transmits the probing packets using the packet train mode when the number of probing packets is greater than the predetermined train threshold.

Here, a transmission method of probing packets is determined according to the number of probing packets so as to use packets satisfying conditions of a probing packet among service packets generated from the media engine (not shown) as efficiently as possible. In other words, since service packets generated from the media engine (not shown) do not have a fixed size and a fixed generation time, the number of packets that satisfy the conditions of a probing packet and are inserted in the probing queue 134 among the service packets is not fixed over time either.

Thus, a train threshold is set to transmit probing packets in the probing queue 134 using the packet train mode when the number of probing packets is greater than the train threshold (i.e., it is possible to transmit a large number of probing packets at the same time), and transmit the probing packets using the packet train mode when the number of probing packets is less than the train threshold. In this way, the probing packets in the probing queue 134 can be used as efficiently as possible.

At this time, the train threshold may be determined according to a data bit rate. For example, when the data bit rate is high, many service packets satisfying the conditions of a probing packet are expected to be generated, such that the train threshold can be set high. On the other hand, when the data bit rate is low, few service packets satisfying the conditions of a probing packet are expected to be generated, such that the train threshold can be set low.

FIG. 4 is a diagram illustrating a state in which a train threshold is determined according to an exemplary embodiment. In this case, transmitted data is a video image, and a threshold probing size is 1400 bytes.

Referring to FIG. 4, in the case of an image having a bit rate of 300 Kbps, 10 service packets satisfying the conditions of a probing packet are generated from an I frame having the highest data capacity. Here, the train threshold may be set to 10 or less. This is because, when the train threshold is set to greater than 10, the corresponding service cannot generate a packet train.

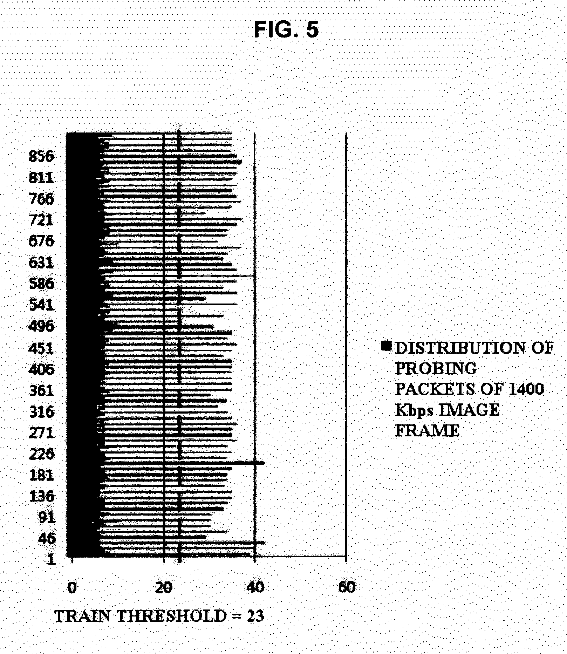

FIG. 5 to FIG. 7 are diagrams illustrating states in which a train threshold is set according to a bit rate of an image frame. Here, FIG. 5 to FIG. 7 show the distribution of probing packets generated when bit rates of an image frame are 1400 Kbps, 700 Kbps and 300 Kbps, respectively.

Referring to FIG. 5 to FIG. 7, the higher a bit rate of an image frame, the higher a generation frequency of probing packets satisfying a threshold probing size of 1400 bytes. Thus, the higher a bit rate of an image frame, the higher a train threshold is set. For example, when bit rates of an image frame are 1400 Kbps, 700 Kbps and 300 Kbps, train thresholds may be set to 23, 15 and 5, respectively.

Meanwhile, when probing packets in the probing queue 134 are initially transmitted to the second terminal 104, the transmission type determiner 144 may use the packet pair mode to calculate an effective capacity of the network. As mentioned above, it is possible to adjust an interval between packets in a packet train using the effective capacity of the corresponding network. Since the effective capacity of the corresponding network can be calculated using the packet pair mode, the packet pair mode may be used to initially transmit probing packets.

In addition, even if the number of probing packets in the probing queue 134 is greater than the predetermined train threshold, when a consecutive train transmission number (i.e., the number of times of consecutively transmitting probing packets in a packet train method) is greater than a predetermined threshold, the transmission type determiner 144 may determine the packet pair mode rather than the packet train mode as a transmission mode. In other words, when probing packets are consecutively transmitted in the packet train mode, an opportunity for transmitting probing packets in the packet pair mode is missed. Thus, when a consecutive train transmission number is greater than the predetermined threshold, the opportunity for transmitting probing packets in the packet pair mode may be given. In this case, the transmission type determiner 144 counts a consecutive train transmission number again. For example, in the case of a high-definition image, there is a high probability that the sizes of service packets generated from the media engine (not shown) are greater than the predetermined threshold probing size, and there are a large number of service packets satisfying the conditions of a probing packet. Then, probing packets may be consecutively transmitted in the packet train mode only, and thus a threshold is set for a consecutive train transmission number to give the opportunity for transmitting probing packets in the packet pair mode.

The packet pair transmitter 143 transmits probing packets, which are determined by the transmission type determiner 144 to be transmitted in the packet pair mode, to the second terminal 104 in the packet pair mode. When the packet pair transmitter 143 transmits probing packets in the packet pair mode, the packet pair transmitter 143 may insert probing identification information (e.g., information indicating that the corresponding packets are probing packets, and information indicating that the corresponding packets are a packet pair) in headers of the probing packets.

The packet pair transmitter 143 may initially transmit probing packets using a default value as an interval between packet pairs. After that, when an available bandwidth of the corresponding network is calculated, the packet pair transmitter 143 may adjust intervals between packet pairs by allocating the available bandwidth of the network according to the number of intervals between the packet pairs. As the available bandwidth of the network, a value measured by the second terminal 104 may be received from the second terminal 104 when the first terminal 102 transmits probing packets in the packet train mode.

The packet train transmitter 145 transmits probing packets, which are determined by the transmission type determiner 144 to be transmitted in the packet train mode, to the second terminal 104 in the packet train mode. When the packet train transmitter 145 transmits probing packets in the packet train mode, the packet train transmitter 145 may insert probing identification information (e.g., information indicating that the corresponding packets are probing packets, and information indicating that the corresponding packets are a packet train) in headers of the probing packets. The packet train transmitter 145 puts a predetermined number or more of probing packets into one group, and transmits the group of probing packets.

The packet train transmitter 145 can adjust an interval between packets in a packet train by calculating a time interval between packets back from the effective capacity of the corresponding network. Here, as the effective capacity of the network, a value measured by the second terminal 104 may be received from the second terminal 104 when the first terminal 102 transmits probing packets in the packet pair mode. If the packet transmitter 114 initially transmits probing packets in the packet pair mode, and the effective capacity of the network is calculated, it is possible to adjust an interval between packets in a packet train using the effective capacity when the packet transmitter 114 subsequently transmits probing packets in the packet train mode.

Meanwhile, the effective capacity and the available bandwidth of the network are updated and measured by the second terminal 104 every time the first terminal 102 transmits probing packets in the packet pair mode or the packet train mode. In this case, the packet pair transmitter 143 and the packet train transmitter 145 adjust an interval between packet pairs and an interval between packets in a packet train using the updated effective capacity and available bandwidth, respectively, thereby adjusting the interval between packet pairs and the interval between packets in a packet train in reflection of real-time network status. As a result, it is possible to obtain accurate and reliable network monitoring results.

The non-probing packet transmitter 147 transmits non-probing packets inserted in the non-probing queue 137 to the second terminal 104.

The report message receiver 117 receives a report message about network monitoring from the second terminal 104. In the report message, at least one among effective capacity, achievable throughput and available bandwidth of the corresponding network, a channel quality indicator (CQI), channel utilization, and network speed may be included. However, network monitoring parameters are not limited to these, and various other network monitoring parameters may be included.

The report message receiver 117 may transfer the effective capacity of the network in the received report message to the packet train transmitter 145. Also, the report message receiver 117 may transfer the available bandwidth of the network in the received report message to the packet pair transmitter 143.

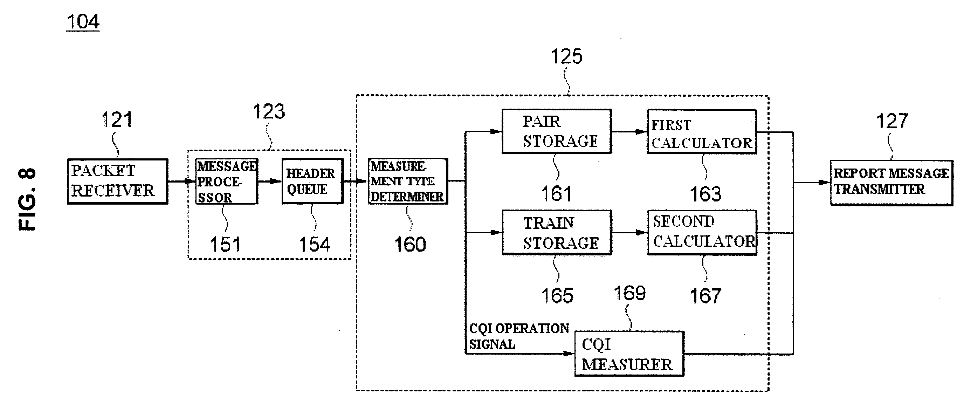

FIG. 8 is a detailed block diagram of a second terminal according to an exemplary embodiment. With reference to FIG. 1 and FIG. 8, a constitution and operation of the second terminal 104 will be described in detail below.

The packet receiver 121 receives packets transmitted by the first terminal 102 via a wired and/or wireless network. For example, the packet receiver 121 may receive probing packets and non-probing packets transmitted by the first terminal 102.

The packet processor 123 includes a message processor 151 and a header queue 154. The message processor 151 determines whether a packet received by the packet receiver 121 is a probing packet or a non-probing packet. At this time, according to whether or not probing identification information is included in a header of the received packet, the message processor 151 may determine whether the packet is a probing packet or a non-probing packet.

When the packet received by the packet receiver 121 is a probing packet, the message processor 151 extracts the header (i.e., header information) from the probing packet and stores the extracted header in the header queue 154. Also, the message processor 151 extracts a payload from the probing packet and transfers the extracted payload to a media engine (not shown) of the second terminal 104. When the packet received by the packet receiver 121 is a non-probing packet, the message processor 151 transfers the non-probing packet to the media engine (not shown) of the second terminal 104.

The measurer 125 includes a measurement type determiner 160, a pair storage 161, a first calculator 163, a train storage 165, a second calculator 167, and a CQI measurer 169.

The measurement type determiner 160 checks the probing identification information from the header of the probing packet stored in the header queue 154, and stores the header of the probing packet transmitted in the packet pair mode in the pair storage 161 and the header of the probing packet transmitted in the packet train mode in the train storage 165.

When the packet receiver 121 receives probing packets, the measurement type determiner 160 may count a reception interval between the probing packets. In other words, when the message processor 151 determines a packet received by the packet receiver 121 as a probing packet, the measurement type determiner 160 counts a time until the next probing packet is received. Here, when the reception interval between the probing packets is greater than a predetermined threshold, the measurement type determiner 160 may generate a CQI operation signal to the CQI measurer 169.

In other words, the measurement type determiner 160 serves to determine a measurement type such that the measurement type can be appropriately used for network monitoring according to a transmission mode of each probing packet or a reception interval between probing packets. Here, the measurement type determiner 160 determines a measurement type according to a transmission mode of each probing packet or a reception interval between probing packets. However, criteria of determination are not limited to these, and a measurement type may be determined according to various other criteria (e.g., the accuracy of a measurement method dependent on a network environment).

Here, the reception interval between probing packets may be greater than the predetermined threshold when the first terminal 102 has no probing packet to transmit. In this case, the first terminal 102 may generate a dummy packet to continuously perform network monitoring. However, when dummy packets are generated for network monitoring, the dummy packets additionally consume bandwidth of the network. Thus, according to necessity, the second terminal 104 may continuously perform network monitoring using the CQI measurer 169 without generating a dummy packet. When the reception interval between probing packets is greater than the predetermined threshold, whether or not to perform network monitoring using the CQI measurer 169 may be determined according to a setting of a user. When network monitoring is set to be performed using the CQI measurer 169, the measurement type determiner 160 generates a CQI operation signal to the CQI measurer 169 as mentioned above. However, a setting of a user is not limited to this, and network monitoring may not be performed for the corresponding time according to a setting of a user.

The pair storage 161 stores headers of probing packets transmitted in the packet pair mode among the probing packets received by the packet receiver 121. The train storage 165 stores headers of probing packets transmitted in the packet train mode among the probing packets received by the packet receiver 121.

The first calculator 163 may calculate the effective capacity of the corresponding network using packet pairs stored in the pair storage 161. The first calculator 163 may transfer the calculated effective capacity of the network to the report message transmitter 127. Here, a method of calculating the effective capacity of the network is known art, and the detailed description thereof will be omitted.

When the number of packet pairs stored in the pair storage 161 exceeds a predetermined threshold pair number, the first calculator 163 may calculate the effective capacity of the network using the packet pairs stored in the pair storage 161. In other words, to improve the accuracy of the effective capacity of the network, the effective capacity of the network is calculated when the number of packet pairs stored in the pair storage 161 exceeds the predetermined threshold pair number.

At this time, using packet pairs that have been stored in the pair storage 161 for a long time, it is not possible to reflect the status of the network in real time. Thus, the first calculator 163 may manage history information about packet pairs stored in the pair storage 161, and delete packet pairs that have been stored in the pair storage 161 for a predetermined time or more such that the packet pairs are not involved in calculation.

The second calculator 167 may calculate at least one of the achievable throughput and the available bandwidth of the corresponding network using a packet train stored in the train storage 163. The second calculator 167 may transfer the calculated achievable throughput and available bandwidth of the network to the report message transmitter 127. Here, a method of calculating the achievable throughput and the available bandwidth of the network is known art, and the detailed description thereof will be omitted.

As described above, a predetermined number or more of probing packets are put into one group and transmitted as a packet train. At this time, the second calculator 167 may calculate at least one of the achievable throughput and the available bandwidth of the network with respect to each group. However, when a probing packet in a packet train is lost in a transmission process of the packet train, it is difficult to correctly find a boundary between groups.

If the achievable throughput and the available bandwidth of the network are calculated with respect to a current group on the assumption that all packets of the current group are received when the next group arrives, the groups are transmitted at a time interval, and there is as much time delay as the time interval between the groups until the report message transmitter 127 transmits a report message about network monitoring to the first terminal 102.

Thus, when a sequence of a current packet (i.e.,

a packet that corresponds to a header finally stored in the train storage 165 at the current point in time) is the same as the last sequence of the corresponding group, the second calculator 167 determines the current packet as the last packet of the group, and calculates the achievable throughput and the available bandwidth of the network. In addition, when the sequence of the current packet is greater than the last sequence of the group, the second calculator 167 determines that packet loss has occurred and transmission of the corresponding group has been finished, and calculates the achievable throughput and the available bandwidth of the network with respect to the group.

In other words, when the sequence of the current packet is equal to or greater than the last sequence of the corresponding group, the second calculator 167 calculates at least one of the achievable throughput and the available bandwidth of the network with respect to the group. In this case, it is possible to reduce a time delay until the report message transmitter 127 transmits a report message about network monitoring to the first terminal 102.

Here, the effective capacity of the network is calculated using a packet pair, and the achievable throughput and the available bandwidth of the network are calculated using a packet train. However, network monitoring parameters are not limited to these, and various other network monitoring parameters may also be calculated using a packet pair and a packet train.

When a CQI operation signal is received from the measurement type determiner 160, the CQI measurer 169 may obtain a CQI of a wireless channel connected with the second terminal 104 and perform network monitoring. However, the CQI measurer 169 does not necessarily perform network monitoring when a CQI operation signal is received, and may not perform network monitoring when it is determined that network monitoring is not necessary. Here, whether or not the CQI measurer 169 performs network monitoring may be determined according to a setting of a user. Also, the CQI measurer 169 may operate when the second terminal 104 is in a wireless environment.

The CQI obtained by the CQI measurer 169 may include at least one of, for example, a maximum bit rate, a channel active time, a channel busy time, a signal level, and a noise level of the corresponding network. The CQI measurer 169 may transfer the CQI to the report message transmitter 127. Also, the CQI measurer 169 may calculate network monitoring parameters such as channel utilization and network speed using the CQI, and then transfer the calculated network monitoring parameters to the report message transmitter 127.

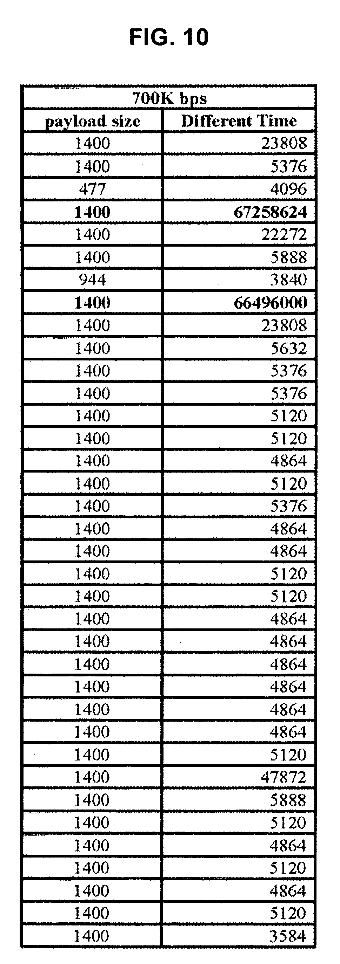

When network monitoring parameters are calculated by the CQI measurer 169, network monitoring can be continuously performed by the CQI measurer 169 of the second terminal 104 without generating a dummy packet even if the first terminal 102 has no probing packet to transmit. In this case, it is possible to perform network monitoring without additional consumption of a network bandwidth. This will be described in detail with reference to FIG. 10 to FIG. 12. Here, a CQI measurer is included in the second terminal 104. However, the disposition of a CQI measurer is not limited to the second terminal 104, and may be included in the first terminal 102. In this case, when no service packet satisfying the conditions of a probing packet is generated for a predetermined time, the first terminal 102 may perform network monitoring by generating a dummy packet or using the CQI measurer prepared in the first terminal 102 according to a setting of a user. Meanwhile, according to a setting of a user, network monitoring may not be performed for the corresponding time.

The report message transmitter 127 transmits a report message about network monitoring to the first terminal 102. In the report message, at least one among effective capacity, achievable throughput and available bandwidth of the corresponding network, a CQI, channel utilization, and network speed may be included.

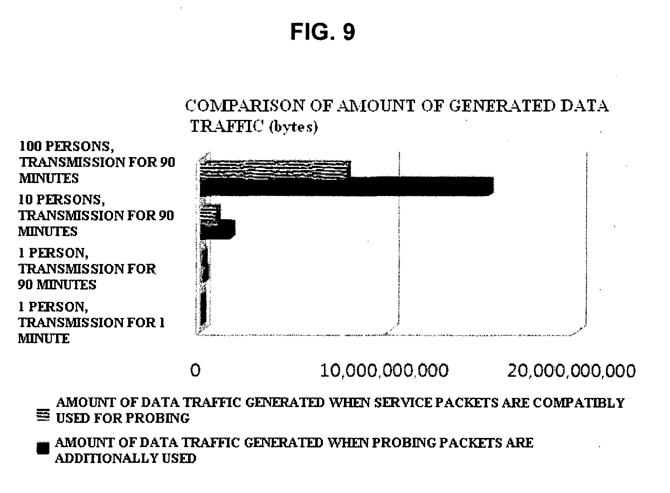

In an exemplary embodiment, service packets are compatibly used for probing, and no probing packets are additionally generated and transmitted. Thus, a network bandwidth is not additionally consumed in a network monitoring process. This will be described with reference to FIG. 9.

FIG. 9 is a graph for comparing the amount of data traffic generated when service packets are compatibly used for probing with the amount of data traffic generated when probing packets are additionally used.

Referring to FIG. 9, the amounts of data traffic generated when one person transmits data for one minute, one person transmits data for 90 minutes, 10 persons transmit data for 90 minutes, and 100 persons transmit data for 90 minutes are compared with each other. Here, the greater the number of simultaneous users, the greater difference between the amount of data traffic generated when service packets are compatibly used for probing and the amount of data traffic generated when probing packets are additionally used.

When the size of a service packet is greater than a predetermined threshold probing size, the service packet is used as a probing packet. In this way, when service packets are generated with dynamically changing sizes in a terminal, a service packet to be used for probing is filtered according to the size of the service packet, and it is possible to obtain network monitoring results in which network status is properly reflected.

In addition, a transmission method of probing packets is determined as the packet pair mode or the packet train mode according to the number of probing packets, such that service packets satisfying conditions of a probing packet can be used for network monitoring as efficiently as possible.

Furthermore, when probing packets are transmitted in the packet pair mode or the packet train mode, an interval between packet pairs and an interval between packets in a packet train are adjusted using network monitoring results, such that network status can be reflected in real time. Consequently, it is possible to obtain accurate and reliable network monitoring results.

Moreover, when a reception interval between probing packets exceeds a predetermined threshold on a receiving side (i.e., no probing packet is generated from a transmitting side for a predetermined time), network monitoring is performed using a CQI without generating a dummy packet, such that network monitoring can be continuously performed without additionally consuming a network bandwidth.

FIG. 10 is a table showing results of measuring the sizes of packets generated for one minute and time intervals between the packets when a first terminal performs streaming transmission of a moving picture having a bit rate of 700 Kbps to a second terminal in a network monitoring system according to an exemplary embodiment. Actually, 4,222 packets were generated, but only some of them are shown in the table for convenience of description.

Referring to FIG. 10, among the packets generated for one minute, packets having sizes of 1400 bytes or more were used as probing packets. Here, intervals between the packets were irregular due to a generation pattern of service packets, congestion of a network, etc., and thus there were cases in which a time interval between probing packets was greater than a predetermined threshold. In other words, red numbers indicate that time intervals between probing packets were greater than a predetermined threshold of 60,000,000 ns. This case indicates that no packets satisfying the conditions of a probing packet were generated from the first terminal 102 for the time intervals. When network monitoring is necessary even for the time intervals, the second terminal 104 may perform network monitoring using the CQI measurer 169 without transmitting a dummy packet.

In related art (Korean Patent Laid-Open Publication No. 10-2006-0122901), when there is no service packet to be used as a probing packet, or a shortage of service packets to be used as probing packets, a transmitting side generates and transmits dummy packets in the packet pair mode. In this case, additional traffic is generated by the dummy packets in addition to service packets, and a network bandwidth is additionally consumed.

In FIG. 10, an average time interval between packets calculated except for time intervals between probing packets exceeding the predetermined threshold is 12,745 ns, and an average time interval between the packets that have time intervals exceeding the predetermined threshold is 66,617,653 ns. In 66,617,653 ns, it is possible to transmit 5,226 packets when a time interval between the packets is set to 12,745 ns. Here, when related art is employed, 5,226 dummy packets are generated in addition to service packets of the corresponding service (i.e., 4,222 service packets).

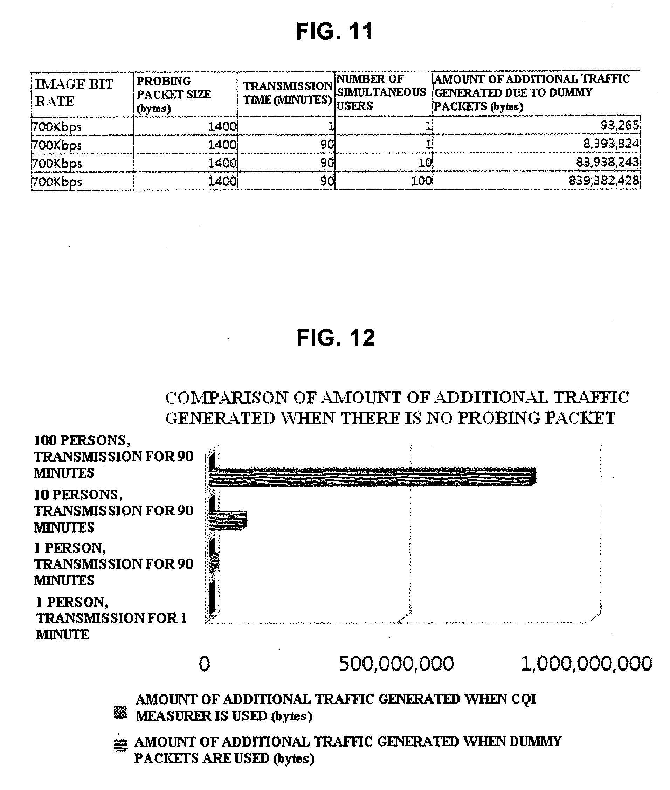

FIG. 11 is table showing the amount of additional traffic generated when a time interval between probing packets exceeds a predetermined threshold, and dummy packets are generated, and FIG. 12 is a graph for comparing the amount of additional traffic generated when a time interval between probing packets exceeds a predetermined threshold, and dummy packets are generated, with the amount of additional traffic generated when the time interval between probing packets exceeds the predetermined threshold, and a CQI measurer is used.

Referring to FIG. 11 and FIG. 12, when a time interval between probing packets exceeded a predetermined threshold, and dummy packets were generated, additional traffic of 93,265 bytes was generated due to dummy packets generated for one minute. Also, when a movie having a running time of 90 minutes was transmitted, additional traffic of 8,393,824 bytes was generated due to dummy packets. Assuming that the corresponding network is used by 10 persons or 100 persons at the same time, additional traffic of 83,938,243 bytes or 839,382,428 bytes is generated due to dummy packets. In this way, when dummy packets are generated, additional traffic is generated due to the dummy packets. Here, with an increase in simultaneous users, the additional traffic increases, and consumption of a network bandwidth increases as much as the increase in additional traffic.

On the other hand, when a time interval between probing packets exceeded the predetermined threshold, and a CQI measurer was used, no dummy packet was generated, and additional traffic was not generated. Thus, it is possible to continuously perform network monitoring while preventing additional consumption of network bandwidth.

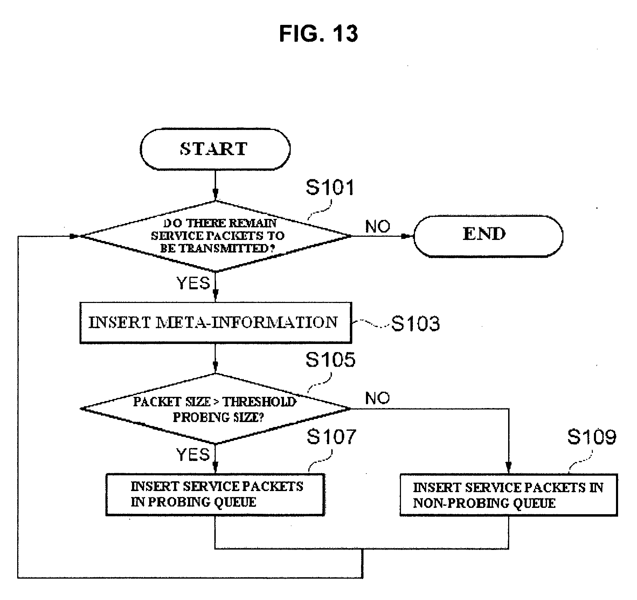

FIG. 13 is a flowchart illustrating operation of a packet classifier in a first terminal according to an exemplary embodiment.

Referring to FIG. 13, the packet classifier 111 checks whether or not there remains a packet to be transmitted to the second terminal 104 (S101). For example, the packet classifier 111 may check whether or not there remains a packet that has been generated from the media engine (not shown) in the first terminal 102 and will be transmitted to the second terminal 104.

When it is checked in step S101 that there remains a service packet to be transmitted to the second terminal 104, the packet classifier 111 inserts meta-information in the service packet (S103). For example, when a service packet is input from the media engine (not shown), the packet classifier 111 may insert meta-information in a header of the service packet. Here, the meta-information inserted in the header of the service packet may be, for example, reception time of the service packet, a sequence number of the packet, and socket information.

Subsequently, the packet classifier 111 compares the size of the service packet with a predetermined threshold probing size (S105). When the comparison result of step S105 indicates that the size of the service packet is greater than the predetermined threshold probing size, the packet classifier 111 inserts the service packet in the probing queue 134 (S107). On the other hand, when the comparison result of step S105 indicates that the size of the service packet is less than the predetermined threshold probing size, the packet classifier 111 inserts the service packet in the non-probing queue 137 (S109).

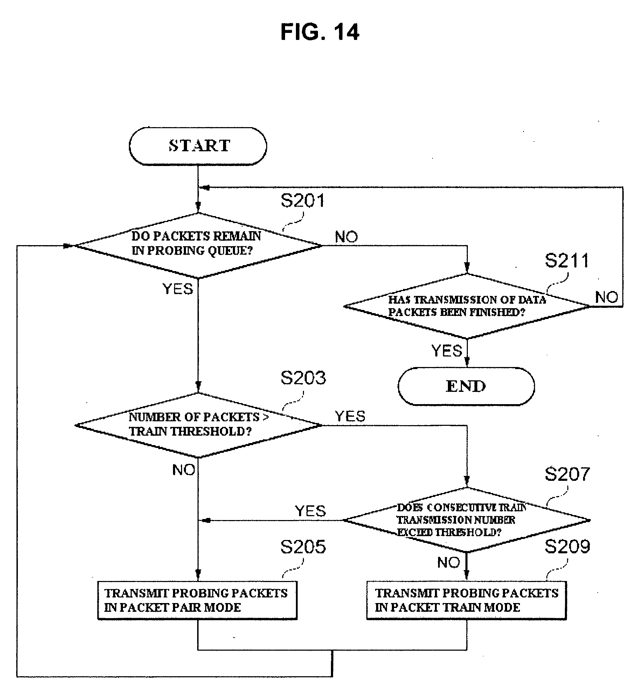

FIG. 14 is a flowchart illustrating operation of a packet transmitter in a first terminal according to an exemplary embodiment. Here, a case of transmitting probing packets in the probing queue 134 is illustrated. A case of transmitting non-probing packets in the non-probing queue 137 may be performed separately from the former case.

Referring to FIG. 14, the packet transmitter 114 checks whether or not there remains a probing packet in the probing queue 134 (S201). When it is checked in step S201 that there remains a probing packet in the probing queue 134, the packet transmitter 114 compares the number of probing packets in the probing queue 134 with a predetermined train threshold (S203).

When the comparison result of step S203 indicates that the number of probing packets in the probing queue 134 is less than the predetermined train threshold, the packet transmitter 114 transmits the probing packets to the second terminal 104 in the packet pair mode (S205).

When the comparison result of step S203 indicates that the number of probing packets in the probing queue 134 is greater than the predetermined train threshold, the packet transmitter 114 checks whether or not a consecutive train transmission number is greater than a predetermined threshold (S207).

When it is checked in step S207 that the consecutive train transmission number does not exceed the predetermined threshold, the packet transmitter 114 transmits the probing packets to the second terminal 104 in the packet train mode (S209). When it is checked in step S207 that the consecutive train transmission number exceeds the predetermined threshold, the packet transmitter 114 transmits the probing packets to the second terminal 104 in the packet pair mode (S205).

Meanwhile, when it is checked in step S201 that there remains no probing packet in the probing queue 134, the packet transmitter 114 checks whether or not transmission of service packets to the second terminal 104 has been finished (S211). When it is checked in step S211 that transmission of service packets has not been finished, the process proceeds back to step S201.

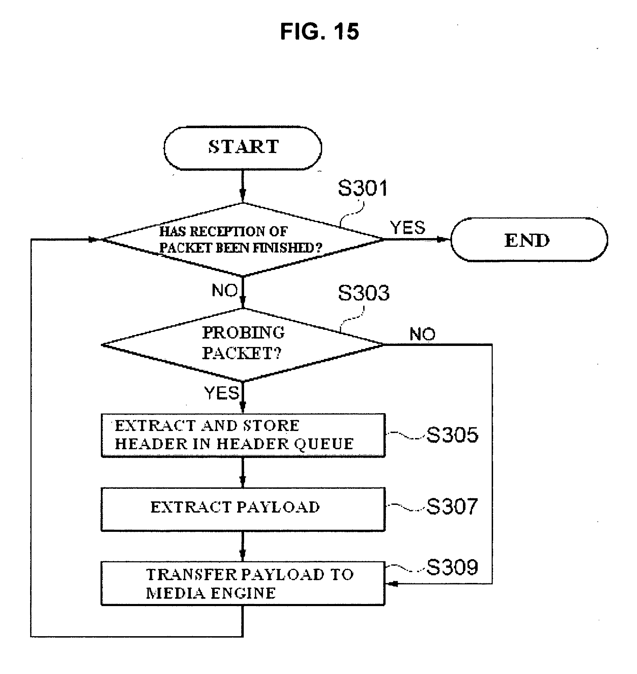

FIG. 15 is a flowchart illustrating operation of a packet processor in a second terminal according to an exemplary embodiment.

Referring to FIG. 15, the packet processor 123 checks whether or not the packet receiver 121 has finished receiving packets (S301). In other words, the packet processor 123 checks whether or not reception of probing packets and non-probing packets transmitted from the first terminal 102 has been finished.

When it is checked in step S301 that packet reception has not been finished, the packet processor 123 checks whether or not packets received by the packet receiver 121 are probing packets (S303). At this time, the packet processor 123 may determine whether a packet received by the packet receiver 121 is a probing packet or a non-probing packet according to whether or not probing identification information has been included in a header of the packet.

When it is checked in step S303 that the packet received by the packet receiver 121 is a probing packet, the packet processor 123 extracts the header (i.e., header information) from the probing packet and stores the header in the header queue 154 (S305).

Subsequently, the packet processor 123 extracts a payload from the probing packet (S307). The packet processor 123 transfers the extracted payload to the media engine (not shown) of the second terminal 104 (S309).

Meanwhile, when it is checked in step S303 that the packet received by the packet receiver 121 is not a probing packet (i.e., is a non-probing packet), the packet processor 123 transfers the non-probing packet to the media engine (not shown) of the second terminal 104 (S309).

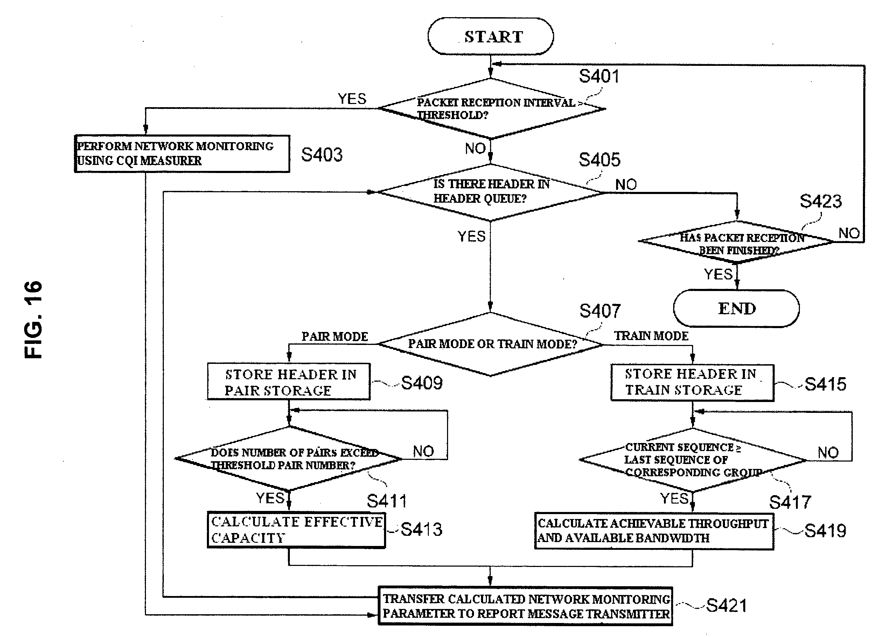

FIG. 16 is a flowchart illustrating a network monitoring operation in a second terminal according to an exemplary embodiment.

Referring to FIG. 16, the measurement type determiner 160 checks whether or not a reception interval between probing packets exceeds a predetermined threshold (S401). When it is checked in step S401 that the reception interval between probing packets exceeds the predetermined threshold, the measurement type determiner 160 generates a CQI operation signal to the CQI measurer 169 such that network monitoring can be performed using the CQI measurer 169 (S403).

Then, the CQI measurer 169 may obtain a CQI of a wireless channel connected with second terminal 104, calculate network monitoring parameters, such as channel utilization and network speed, using the obtained CQI, and then transfer the calculated network monitoring parameters to the report message transmitter 127 (S421). Meanwhile, whether or not the CQI measurer 169 performs network monitoring may be determined according to a setting of a user.

When it is checked in step S401 that the reception interval between probing packets does not exceed the predetermined threshold, the measurement type determiner 160 checks whether or not there is a header in the header queue 154 (S405). When it is checked in step S405 that there is a header, the measurement type determiner 160 checks whether a transmission mode of the corresponding probing packet is the packet pair mode or the packet train mode (S407). At this time, the measurement type determiner 160 may check the transmission mode of the probing packet using probing identification information included in the header.

When it is checked in step S407 that the transmission mode of the probing packet is the packet pair mode, the measurement type determiner 160 stores the header of the probing packet in the pair storage 161 (S409).

Subsequently, the measurer 125 checks whether or not the number of packet pairs stored in the pair storage 161 exceeds a predetermined threshold pair number (S411). When it is checked in step S411 that the number of packet pairs exceeds the predetermined threshold pair number, the measurer 125 calculates an effective capacity of the corresponding network using the packet pairs stored in the pair storage 161 (S413).

When it is checked in step S407 that the transmission mode of the probing packet is the packet train mode, the measurement type determiner 160 stores the header of the probing packet in the train storage 165 (S415).

Subsequently, the measurer 125 checks whether or not a sequence of a packet corresponding to a header finally stored in the train storage 165 is equal to or greater than the last sequence of the corresponding group at the current point in time (S417).

When it is checked in step S417 that the sequence of the packet corresponding to the header finally stored in the train storage 165 is equal to or greater than the last sequence of the corresponding group at the current point in time, the measurer 125 calculates an achievable throughput and an available bandwidth of the network using a packet train stored in the train storage 165 (S419).

Subsequently, the measurer 125 transfers the calculated effective capacity, achievable throughput and available bandwidth to the report message transmitter 127 (S421).

Meanwhile, when it is checked in step S405 that there is no header in the header queue 154, the measurement type determiner 160 checks whether or not packet reception has been finished (S423). When it is checked in step S423 packet reception has not been finished, the process proceeds back to step S401.

In exemplary embodiments, service packets are compatibly used for probing. Thus, no probing packet is additionally generated and transmitted, and network bandwidth is not additionally consumed in a network monitoring process. Here, when the size of a service packet is greater than a predetermined threshold probing size, the service packet is used as a probing packet. In this way, when service packets are generated with dynamically changing sizes in a terminal, a service packet to be used for probing is filtered according to the size of the service packet, and it is possible to obtain network monitoring results in which network status is properly reflected.

In addition, a transmission method of probing packets is determined as the packet pair mode or the packet train mode according to the number of probing packets, such that service packets satisfying the conditions of a probing packet can be used for network monitoring as efficiently as possible.

Furthermore, when probing packets are transmitted in the packet pair mode or the packet train mode, an interval between packet pairs and an interval between packets in a packet train are adjusted using network monitoring results, such that network status can be reflected in real time. Consequently, it is possible to obtain accurate and reliable network monitoring results.

Moreover, when a reception interval between probing packets exceeds a predetermined threshold on a receiving side (i.e., no probing packet is generated from a transmitting side for a predetermined time), network monitoring is performed using a CQI without generating a dummy packet, such that network monitoring can be continuously performed without additionally consuming network bandwidth.

It will be apparent to those skilled in the art that various modifications can be made to the above-described exemplary embodiments without departing from the scope of the inventive concept. Thus, it is intended that the inventive concept covers all such modifications provided they come within the scope of the appended claims.

**Claims**

1. A transmitting side terminal, comprising:

   a packet classifier (111) configured to classify input service packets generated at the transmitting side terminal for performing an actual communication service as probing packets or non-probing packets, based on one or more respective features of the service packets; and
   a packet transmitter (114) configured to selectively transmit the probing packets and the non-probing packets,
   wherein the packet classifier (111) is further configured to classify a given input service packet of the input service packets as one of the probing packets when the given input service packet has a respective size greater than a predetermined probing size threshold, and to classify the given input service packet as a non-probing packet when the respective size is less than the predetermined probing size threshold.

2. The transmitting side terminal of claim 1, wherein the packet transmitter (114) is further configured to transmit the classified probing packets in a packet train mode when a number of the probing packets per train is greater than a predetermined train threshold, and to transmit the classified probing packets in a packet pair mode when the number of probing packets is less than the predetermined train threshold.

**3.** The transmitting side terminal of claim 2, wherein the packet transmitter (114) is further configured to transmit the probing packets in the packet pair mode after a consecutive train transmission number exceeds a predetermined threshold during train mode transmission.

**4.** The transmitting side terminal of one of claims 1 to 3, further comprising a report message receiver (117) configured to receive, from a receiving side terminal receiving the probing packets, a report message pertaining to a network between the transmitting side terminal (102) and the receiving side terminal (104) receiving the probing packets from the transmitting side terminal (102), wherein the message indicates one or more of an effective network capacity of the network, an achievable network throughput of the network, and an available network bandwidth of the network.

**5.** The transmitting side terminal of claim 4, wherein, when the packet transmitter (114) transmits the probing packets in a packet pair mode, the packet transmitter (114) is further configured to adjust intervals between packet pairs by allocating the indicated available network bandwidth based on a number of intervals between the packet pairs.

**6.** The transmitting side terminal of claim 4, wherein, when the packet transmitter (114) transmits the probing packets in a packet train mode, the packet transmitter (114) is further configured to adjust an interval between the packets in a packet train by calculating a time interval between packets based on the indicated effective network capacity.

**7.** The transmitting side terminal of one of claims 1 to 6, wherein the packet transmitter (114) is further configured to insert probing identification information in the probing packet headers and then transmits the probing packets.

**8.** A receiving side terminal, comprising:

a packet receiver (121) configured to receive service packets from a transmitting side terminal (102);
a packet processor (123) configured to:

determine a given received service packet of the received service packets as a received probing packet of a plurality of probing packets in response to detecting of probing identification information in a header of the given received service packet, and extract and store the respective headers of the probing packets; and

a measurer (125) configured to measure a network monitoring parameter using information included in the respective headers of the probing packets,
wherein the service packet is classified as probing packet, when the size of the service packet is greater than a predetermined probing size threshold and is classified as a non-probing packet, when the respective size is less than said threshold.

**9.** The receiving side terminal of claim 8, wherein the measurer (125) is further configured to include a measurement type determiner configured to store the respective headers of the probing packets in one of a pair storage and a train storage according to transmission modes of the probing packets included in the probing identification information.

**10.** The receiving side terminal of claim 9, wherein the measurer (123) is further configured to calculate an effective network capacity using the stored packet pairs, when a number of packet pairs stored in the pair storage exceeds a predetermined threshold pair number.

**11.** The receiving side terminal of claim 9, wherein the measurer (125) is further configured to calculate at least one of an achievable network throughput and an available network bandwidth using the group constituting the packet train, when a respective sequence number of a packet corresponding to a header last stored in the train storage is equal to or greater than a last sequence number of a group constituting a packet train at a current point in time.

**12.** The receiving side terminal of claim 9, wherein:

the measurer (125) is further configured to measure a reception interval between the probing packets, and to generate a channel quality indicator, CQI, operation signal when the reception interval exceeds a predetermined threshold, and
the measurer (125) is further configured to obtain a CQI of a wireless channel connected with the terminal using a CQI measurer when the CQI operation signal is generated.

**13.** A method of monitoring a network, comprising:

classifying service packets, at a transmitting side terminal (102), as probing packets or non-probing packets according to one or more respective features of the service packets, and transmitting the service packets; said service packets being generated at the transmitting side terminal (102) for performing an actual communication service.

determining, at a receiving side terminal (104), whether the service packets received from the transmitting side terminal (102) are probing packets; and

when the received service packets are probing packets, extracting headers of the probing packets, and measuring a network monitoring parameter using information included in the extracted headers of the probing packets,

wherein the step of classifying service packets comprises classifying a given input service packet of the input service packets as one of the probing packets when the given input service packet has a respective size greater than a predetermined probing size threshold, and classifying the given input service packet as a nonprobing packet when the respective size is less than the predetermined probing size threshold.

14. The method of claim 13 adapted to operate the transmitting side terminal (102) according to one of claims 1 to 7 and adapted to operate the receiving side terminal (104) according to one of claims 8 to 12.

**Patentansprüche**

1. Sendeseiten-Endgerät, das umfasst:

eine Paket-Klassifizierungseinrichtung (111), die so konfiguriert ist, dass sie eingegangene Dienst-Pakete, die an dem Sendeseiten-Endgerät zum Durchführen eines tatsächlichen Kommunikations-Dienstes erzeugt werden, auf Basis eines oder mehrerer jeweiligen/jeweiliger Merkmals/Merkmale der Dienst-Pakete als Prüf-Pakete (probing packet) oder Nicht-Prüf-Pakete (non-probing packet) klassifiziert; und eine Paket-Sendeeinrichtung (114), die so konfiguriert ist, dass sie selektiv die Prüf-Pakete und die Nicht-Prüf-Pakete sendet,

wobei die Paket-Klassifizierungseinrichtung (111) des Weiteren so konfiguriert ist, dass sie ein bestimmtes eingegangenes Dienst-Paket der eingegangenen Dienst-Pakete als eines der Prüf-Pakete klassifiziert, wenn das bestimmte eingegangene Dienst-Paket eine entsprechende Größe hat, die über einem vorgegebenen Prüf-Größen-Schwellenwert liegt, und das bestimmte eingegangene Dienst-Paket als Nicht-Prüf-Paket klassifiziert, wenn die entsprechende Größe unter dem vorgegebenen Prüf-Größen-Schwellenwert liegt.

2. Sendeseiten-Endgerät nach Anspruch 1, wobei die Paket-Sendeeinrichtung (114) des Weiteren so konfiguriert ist, dass sie die klassifizierten Prüf-Pakete in einem Packet-Train-Modus sendet, wenn eine Anzahl der Prüf-Pakete pro Train über einem vorgegebenen Train-Schwellenwert liegt, und die klassifizierten Prüf-Pakete in einem Paket-Paar-Modus sendet, wenn die Anzahl von Prüf-Paketen unter dem vorgegebenen Train-Schwellenwert liegt.

3. Sendeseiten-Endgerät nach Anspruch 2, wobei die Paket-Sendeeinrichtung (114) des Weiteren so konfiguriert ist, dass sie die Prüf-Pakete in dem Paket-Paar-Modus sendet, wenn eine Anzahl aufeinander folgende Train-Sendevorgänge während des Sendens im Train-Modus einen vorgegebenen Schwellenwert überschreitet.

4. Sendeseiten-Endgerät nach einem der Ansprüche 1 bis 3, das des Weiteren eine Einrichtung (117) zum Empfangen von Bericht-Mitteilungen umfasst, die so konfiguriert ist, dass sie von einem Empfangsseiten-Endgerät, das die Prüf-Pakete empfängt, eine Bericht-Mitteilung empfängt, die ein Netz zwischen dem Sendeseiten-Endgerät (102) und dem Empfangsseiten-Endgerät (104) betrifft, das die Prüf-Pakete von dem Sendeseiten-Endgerät (102) empfängt, wobei die Mitteilung eine effektive Netz-Kapazität des Netzes, einen erreichbaren Netz-Durchsatz des Netzes oder/und eine erreichbare Netz-Bandbreite des Netzes anzeigt.

5. Sendeseiten-Endgerät nach Anspruch 4, wobei die Paket-Sendeeinrichtung (114) des Weiteren so konfiguriert ist, dass sie, wenn die Paket-Sendeeinrichtung (114) die Prüf-Pakete in einem Paket-Paar-Modus sendet, Intervalle zwischen Paket-Paaren anpasst, indem sie die angezeigte verfügbare Netz-Bandbreite auf Basis einer Anzahl von Intervallen zwischen den Paket-Paaren zuweist.

6. Sendeseiten-Endgerät nach Anspruch 4, wobei die Paket-Sendeeinrichtung (114) des Weiteren konfiguriert ist, dass sie, wenn die Paket-Sendeeinrichtung (114) die Prüf-Pakete in einem Paket-Train-Modus sendet, ein Intervall zwischen den Paketen in einem Paket-Train anpasst, indem sie ein Zeitintervall zwischen Paketen auf Basis der angezeigten effektive Netz-Kapazität berechnet.

7. Sendeseiten-Endgerät nach einem der Ansprüche 1 bis 6, wobei die Paket-Sendeeinrichtung (114) des Weiteren so konfiguriert ist, dass sie Prüf-Identifizierungsinformationen in die Header von Prüf-Paketen einfügt und dann die Prüf-Pakete sendet.

8. Empfangsseiten-Endgerät, das umfasst:

eine Paket-Empfangseinrichtung (121), die so konfiguriert ist, dass sie Dienst-Pakete von einem Sendeseiten-Endgerät (102) empfängt;

eine Paket-Verarbeitungseinrichtung (123), die so konfiguriert ist, dass sie:

in Reaktion auf Erfassung von Prüf-Identifizierungsinformationen in einem Header eines bestimmten empfangenen Dienst-Paketes das bestimmte empfangene Dienst-Paket der empfangenen Dienst-Pakete als ein empfangenes Prüf-Paket einer Vielzahl von Prüf-Paketen bestimmt, und die entsprechenden Header der Prüf-Pakete extrahiert und speichert; sowie eine Messeinrichtung (125), die so konfiguriert ist, dass sie einen Netzüberwachungs-Parameter unter Verwendung von Informationen misst, die in den entsprechenden Headern der Prüf-Pakete enthalten sind,

wobei das Dienst-Paket als ein Prüf-Paket klassifiziert wird, wenn die Größe des Dienst-Paketes über einem vorgegebenen Prüf-Größen-Schwellenwert liegt, und als Nicht-Prüf-Paket klassifiziert wird, wenn die entsprechende Größe unter dem Schwellenwert liegt.

9. Empfangsseiten-Endgerät nach Anspruch 8, wobei die Messeinrichtung (125) des Weiteren so konfiguriert ist, dass sie eine Einrichtung zum Bestimmen eines Messungs-Typs einschließt, die so eingerichtet ist, dass sie die entsprechenden Header der Prüf-Pakete entsprechend Sende-Modi der Prüf-Pakete, die in den Prüf-Identifizierungsinformationen enthalten sind, in einem Paar-Speicher oder einem Train-Speicher speichert.

10. Empfangsseiten-Endgerät nach Anspruch 9, wobei die Messeinrichtung (123) des Weiteren so konfiguriert ist, dass sie eine effektive Netz-Kapazität unter Verwendung der gespeicherten Paket-Paare berechnet, wenn eine Anzahl in dem Paar-Speicher gespeicherter Paket-Paare einen vorgegebenen Schwellenwert der Anzahl von Paaren überschreitet.

11. Empfangsseiten-Endgerät nach Anspruch 9, wobei die Messeinrichtung (125) des Weiteren so konfiguriert ist, dass sie einen erreichbaren Netz-Durchsatz oder/und eine erreichbare Netz-Bandbreite unter Verwendung der Gruppe berechnet, die den Paket-Train bildet, wenn eine entsprechende Sequenznummer eines Paketes, das einem zuletzt in dem Train-Speicher gespeicherten Header entspricht, genauso groß ist wie oder größer als eine letzte Sequenznummer einer Gruppe, die einem Paket-Train bildet, zu einem aktuellen Zeitpunkt.

12. Empfangsseiten-Endgerät nach Anspruch 9, wobei:

die Messeinrichtung (125) des Weiteren so konfiguriert ist, dass sie ein Empfangs-Intervall zwischen den Prüf-Paketen misst und ein CQI-Betriebssignal (channel quality indicator operation signal) erzeugt, wenn das Empfangs-Intervall einen vorgegebenen Schwellenwert überschreitet, und
die Messeinrichtung (125) des Weiteren so konfiguriert ist, dass sie einen CQI eines Funkkanals, der mit dem Endgerät verbunden ist, unter Verwendung einer CQI-Messeinrichtung ermittelt, wenn das CQI-Betriebssignal erzeugt wird.

13. Verfahren zum Überwachen eines Netzes, das umfasst:

Klassifizieren von Dienst-Paketen an einem Sendeseiten-Endgerät (102) als Prüf-Pakete oder Nicht-Prüf-Pakete entsprechend einem oder mehreren jeweiligen Merkmal/en der Dienst-Pakete und Senden der Dienst-Pakete, wobei die Dienst-Pakete an dem Sendeseiten-Endgerät (102) erzeugt werden, um einen tatsächlichen Kommunikations-Dienst durchzuführen,
Feststellen, ob die von dem Sendeseiten-Endgerät (102) empfangenen Dienst-Pakete Prüf-Pakete sind, an einem Empfangsseiten-Endgerät (104); und
wenn die empfangenen Dienst-Pakete Prüf-Pakete sind, Extrahieren von Headern der Prüf-Pakete und Messen eines Netz-Überwachungsparameters unter Verwendung in den extrahierten Headern der Prüf-Pakete enthaltener Informationen,
wobei der Schritt des Klassifizierens von Dienst-Paketen umfasst, dass ein bestimmtes eingegangenes Dienst-Paket der eingegangenen Dienst-Pakete als eines der Prüf-Pakete klassifiziert wird, wenn das bestimmte eingegangene Dienst-Paket eine entsprechende Größe hat, die über einem vorgegebenen Prüf-Größen-Schwellenwert liegt, und das bestimmte eingegangene Dienst-Paket als ein Nicht-Prüf-Paket klassifiziert wird, wenn die entsprechende Größe unter dem vorgegebenen Prüf-Größen-Schwellenwert liegt.

14. Verfahren nach Anspruch 13, das zum Betreiben des Sendeseiten-Endgerätes (102) nach einem der Ansprüche 1 bis 7 eingerichtet ist und zum Betreiben des Empfangsseiten-Endgerätes (104) nach einem der Ansprüche 8 bis 12 eingerichtet ist.

**Revendications**

1. Terminal côté transmission, comprenant :

un classificateur de paquets (111) configuré pour classifier des paquets de service d'entrée générés au terminal côté transmission pour mettre en oeuvre un service de communication actuel comme paquets de sondage ou paquets de non-sondage, sur base d'une ou plusieurs caractéristiques respectives des paquets de service ; et

un transmetteur de paquets (114) configuré pour transmettre sélectivement les paquets de sondage et les paquets de non-sondage,

dans lequel le classificateur de paquets (111) est en outre configuré pour classifier un paquet de service d'entrée donné des paquets de service d'entrée comme l'un des paquets de sondage quand le paquet de service d'entrée donné a une taille respective supérieure à un seuil de taille de sondage prédéterminé, et pour classifier le paquet de service d'entrée donné comme un paquet de non-sondage quand la taille respective est inférieure au seuil de taille de sondage prédéterminé.

2. Terminal côté transmission selon la revendication 1, dans lequel le transmetteur de paquets (114) est en outre configuré pour transmettre les paquets de sondage classifiés dans un mode à train de paquets quand un nombre de paquets de sondage par train est supérieur à un seuil de train prédéterminé, et pour transmettre les paquets de sondage classifiés dans un mode à paire de paquets quand le nombre de paquets de sondage est inférieur au seuil de train prédéterminé.

3. Terminal côté transmission selon la revendication 2, dans lequel le transmetteur de paquets (114) est en outre configuré pour transmettre les paquets de sondage dans le mode à paire de paquets après qu'un nombre de transmissions de train consécutives dépasse un seuil prédéterminé durant une transmission en mode train.

4. Terminal côté transmission selon l'une des revendications 1 à 3, comprenant en outre un récepteur de message de rapport (117) configuré pour recevoir, en provenance d'un terminal côté réception qui reçoit les paquets de sondage, un message de rapport appartenant à un réseau entre le terminal côté transmission (102) et le terminal côté réception (104) recevant les paquets de sondage du terminal côté transmission (102), dans lequel le message indique un ou plusieurs paramètres parmi une capacité de réseau utile du réseau, un débit de réseau réalisable par le réseau, et une bande passante de réseau disponible du réseau.

5. Terminal côté transmission selon la revendication 4, dans lequel, quand le transmetteur de paquets (114) transmet les paquets de sondage dans un mode à paire de paquets, le transmetteur de paquets (114) est en outre configuré pour ajuster des intervalles entre des paires de paquets en attribuant la bande passante de réseau disponible indiquée sur base d'un nombre d'intervalles entre les paires de paquets.

6. Terminal côté transmission selon la revendication 4, dans lequel, quand le transmetteur de paquets (114) transmet les paquets de sondage dans un mode à train de paquets, le transmetteur de paquets (114) est en outre configuré pour ajuster un intervalle entre les paquets dans un train de paquets en calculant un intervalle temporel entre les paquets sur base de la capacité de réseau utile indiquée.

7. Terminal côté transmission selon l'une des revendications 1 à 6, dans lequel le transmetteur de paquets (114) est en outre configuré pour insérer de l'information d'identification de sondage dans les en-têtes de paquet de sondage et transmet ensuite les paquets de sondage.

8. Terminal côté réception, comprenant :

un récepteur de paquets (121) configuré pour recevoir des paquets de service d'un terminal côté transmission (102) ;

un processeur de paquets (123) configuré pour :

déterminer un paquet de service reçu donné des paquets de service reçus comme un paquet de sondage reçu parmi une pluralité de paquets de sondage en réponse à la détection d'information d'identification de sondage dans un en-tête du paquet de service reçu donné, et

extraire et stocker les en-têtes respectifs des paquets de sondage ; et

un dispositif de mesure (125) configuré pour mesurer un paramètre de surveillance de réseau en utilisant de l'information incluse dans les en-têtes respectifs des paquets de sondage,

dans lequel le paquet de service est classifié comme un paquet de sondage quand la taille du paquet de service est supérieure à un seuil de taille de sondage prédéterminé, et est classifié comme un paquet de non-sondage quand la taille respective est inférieure audit seuil.

9. Terminal côté réception selon la revendication 8, dans lequel le dispositif de mesure (125) est en outre configuré pour inclure un déterminateur de type de mesure configuré pour stocker les en-têtes respectifs des paquets de sondage dans un stockage parmi un stockage de paires et un stockage de trains conformément à des modes de transmission des paquets de sondage inclus dans l'information d'identification de sondage.

10. Terminal côté réception selon la revendication 9, dans lequel le dispositif de mesure (123) est en outre configuré pour calculer une capacité de réseau utile en utilisant les paires de paquets stockées, quand un nombre de paires de paquets stockées dans le stockage de paires dépasse un nombre de paires seuil prédéterminé.

11. Terminal côté réception selon la revendication 9, dans lequel le dispositif de mesure (125) est en outre configuré pour calculer au moins un paramètre parmi un débit de réseau réalisable et une bande passante de réseau disponible en utilisant le groupe constituant le train de paquets, quand un nombre de séquences respectives d'un paquet correspondant à un en-tête stocké en dernier dans le stockage de trains est supérieur ou égal à un dernier numéro de séquence d'un groupe constituant un train de paquets à un point temporel actuel.

12. Terminal côté réception selon la revendication 9, dans lequel :

le dispositif de mesure (125) est en outre configuré pour mesurer un intervalle de réception entre les paquets de sondage, et pour générer un signal d'opération d'indicateur de qualité de canal CQI, soit Channel Quality Indicator, quand l'intervalle de réception dépasse un seuil prédéterminé, et

le dispositif de mesure (125) est en outre configuré pour obtenir un CQI d'un canal sans fil connecté au terminal en utilisant un dispositif de mesure de CQI quand le signal d'opération de CQI est généré.

13. Procédé de surveillance d'un réseau, comprenant :

la classification de paquets de service, sur un terminal côté transmission (102), comme paquets de sondage ou paquets de non-sondage conformément à une ou plusieurs caractéristiques respectives des paquets de service, et la transmission des paquets de service ; lesdits paquets de service étant générés sur le terminal côté transmission (102) pour mettre en oeuvre un service de communication actuel,

la détermination, sur un terminal côté réception (104), du fait que les paquets de service reçus du terminal côté transmission (102) sont ou non des paquets de sondage ; et

quand les paquets de service reçus sont des paquets de sondage, l'extraction d'en-têtes des paquets de sondage et la mesure d'un paramètre de surveillance de réseau en utilisant de l'information incluse dans les en-têtes extraits des paquets de sondage,

dans lequel l'étape de classification de paquets de service comprend la classification d'un paquet de service d'entrée donné des paquets de service d'entrée comme l'un des paquets de sondage quand le paquet de service d'entrée donné a une taille respective supérieure à un seuil de taille de sondage prédéterminé, et la classification du paquet de service d'entrée donné comme un paquet de non-sondage quand la taille respective est inférieure au seuil de taille de sondage prédéterminé.

14. Procédé selon la revendication 13, adapté pour faire fonctionner le terminal côté transmission (102) selon l'une des revendications 1 à 7 et adapté pour faire fonctionner le terminal côté réception (104) selon l'une des revendications 8 à 12.

EP 2 728 799 B1

**FIG. 1**

# FIG. 2

# FIG. 3

|  | TRANSMITTING SIDE | RECEIVING SIDE |
|---|---|---|

PACKET PAIR MODE :

PACKET TRAIN MODE :

# FIG. 4

| Video bit rate : 300K bps | | |
|---|---|---|
| payload size | sec | nano |
| 1400 | 1340195943 | 954758535 |
| 1400 | 1340195943 | 954781781 |
| 1400 | 1340195943 | 954787535 |
| 1400 | 1340195943 | 954792614 |
| 1400 | 1340195943 | 954797715 |
| 1400 | 1340195943 | 954802601 |
| 1400 | 1340195943 | 954807428 |
| 1400 | 1340195943 | 954812223 |
| 1400 | 1340195943 | 954817034 |
| 1400 | 1340195943 | 954821713 |
| 1202 | 1340195943 | 954825611 |
| 1400 | 1340195944 | 21575425 |
| 86 | 1340195944 | 21597706 |
| 1400 | 1340195944 | 88768886 |
| 79 | 1340195944 | 88791845 |
| 1400 | 1340195944 | 154779173 |
| 220 | 1340195944 | 154801648 |
| 1400 | 1340195944 | 221646853 |
| 98 | 1340195944 | 221670660 |

I frame

P frame

P frame

# FIG. 5

TRAIN THRESHOLD = 23

■DISTRIBUTION OF
PROBING
PACKETS OF 1400
Kbps IMAGE
FRAME

## FIG. 6

DISTRIBUTION OF
PROBING PACKETS OF
700 Kbps IMAGE FRAME

Train Threshold=15

## FIG. 7

DISTRIBUTION OF
PROBING PACKETS OF 300
Kbps IMAGE FRAME

Train Threshold=5

# FIG. 8

# FIG. 9

COMPARISON OF AMOUNT OF GENERATED DATA
TRAFFIC (bytes)

100 PERSONS,
TRANSMISSION FOR 90
MINUTES

10 PERSONS,
TRANSMISSION FOR 90
MINUTES

1 PERSON,
TRANSMISSION FOR
90 MINUTES

1 PERSON,
TRANSMISSION FOR 1
MINUTE

0          10,000,000,000          20,000,000,000

AMOUNT OF DATA TRAFFIC GENERATED WHEN SERVICE PACKETS ARE COMPATIBLY
USED FOR PROBING

AMOUNT OF DATA TRAFFIC GENERATED WHEN PROBING PACKETS ARE
ADDITIONALLY USED

# FIG. 10

| 700K bps | |
|---|---|
| payload size | Different Time |
| 1400 | 23808 |
| 1400 | 5376 |
| 477 | 4096 |
| **1400** | **67258624** |
| 1400 | 22272 |
| 1400 | 5888 |
| 944 | 3840 |
| **1400** | **66496000** |
| 1400 | 23808 |
| 1400 | 5632 |
| 1400 | 5376 |
| 1400 | 5376 |
| 1400 | 5120 |
| 1400 | 5120 |
| 1400 | 4864 |
| 1400 | 5120 |
| 1400 | 5376 |
| 1400 | 4864 |
| 1400 | 4864 |
| 1400 | 5120 |
| 1400 | 5120 |
| 1400 | 4864 |
| 1400 | 4864 |
| 1400 | 4864 |
| 1400 | 4864 |
| 1400 | 4864 |
| 1400 | 4864 |
| 1400 | 5120 |
| 1400 | 47872 |
| 1400 | 5888 |
| 1400 | 5120 |
| 1400 | 4864 |
| 1400 | 5120 |
| 1400 | 4864 |
| 1400 | 5120 |
| 1400 | 3584 |

# FIG. 11

| IMAGE BIT RATE | PROBING PACKET SIZE (bytes) | TRANSMISSION TIME (MINUTES) | NUMBER OF SIMULTANEOUS USERS | AMOUNT OF ADDITIONAL TRAFFIC GENERATED DUE TO DUMMY PACKETS (bytes) |
|---|---|---|---|---|
| 700Kbps | 1400 | 1 | 1 | 93,265 |
| 700Kbps | 1400 | 90 | 1 | 8,393,824 |
| 700Kbps | 1400 | 90 | 10 | 83,938,243 |
| 700Kbps | 1400 | 90 | 100 | 839,382,428 |

# FIG. 12

## COMPARISON OF AMOUNT OF ADDITIONAL TRAFFIC GENERATED WHEN THERE IS NO PROBING PACKET

100 PERSONS, TRANSMISSION FOR 90 MINUTES

10 PERSONS, TRANSMISSION FOR 90 MINUTES

1 PERSON, TRANSMISSION FOR 90 MINUTES

1 PERSON, TRANSMISSION FOR 1 MINUTE

0      500,000,000      1,000,000,000

AMOUNT OF ADDITIONAL TRAFFIC GENERATED WHEN CQI MEASURER IS USED (bytes)

AMOUNT OF ADDITIONAL TRAFFIC GENERATED WHEN DUMMY PACKETS ARE USED (bytes)

# FIG. 13

START

S101
DO THERE REMAIN
SERVICE PACKETS TO
BE TRANSMITTED?

NO → END

YES

INSERT META-INFORMATION ⟶ S103

S105
PACKET SIZE > THRESHOLD
PROBING SIZE?

NO

S107

YES

INSERT SERVICE PACKETS
IN PROBING QUEUE

S109

INSERT SERVICE PACKETS IN
NON-PROBING QUEUE

# FIG. 14

START

S201

DO PACKETS REMAIN IN PROBING QUEUE? — NO

S211

HAS TRANSMISSION OF DATA PACKETS BEEN FINISHED? — NO

YES

YES

END

S203

NUMBER OF PACKETS > TRAIN THRESHOLD? — YES

NO

S207

DOES CONSECUTIVE TRAIN TRANSMISSION NUMBER EXCEED THRESHOLD?

YES

S205

NO

S209

TRANSMIT PROBING PACKETS IN PACKET PAIR MODE

TRANSMIT PROBING PACKETS IN PACKET TRAIN MODE

# FIG. 15

START

S301

HAS RECEPTION OF
PACKET BEEN FINISHED? — YES → END

NO

S303

PROBING
PACKET? — NO

YES

EXTRACT AND STORE
HEADER IN HEADER QUEUE — S305

EXTRACT PAYLOAD — S307

TRANSFER PAYLOAD TO
MEDIA ENGINE — S309

# FIG. 16

**EP 2 728 799 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008108697 A1
- EP 1708429 A1
- KR 1020060122901 A
- KR 1020060122901

**Non-patent literature cited in the description**

- **ZHENHUI YUAN et al.** A novel bandwidth estimation algorithm for IEEE 802.11 TCP data transmissions. *School of Electronic Engineering, Dublin City University, Ireland,* 30 April 2012, ISBN 978-1-4673-0681-2, 377-382